Europäisches Patentamt

European Patent Office

Office européen des brevets

(19)

(11) Numéro de publication : **0 008 992**
**B1**

(12) **FASCICULE DE BREVET EUROPÉEN**

(45) Date de publication du fascicule du brevet :
07.11.84

(51) Int. Cl.³ : **C 22 B 58/00**, **C 22 B 19/26**,
**C 22 B 3/00**

(21) Numéro de dépôt : **79400635.3**

(22) Date de dépôt : **11.09.79**

(54) Procédé de récupération de l'indium.

(30) Priorité : **11.09.78 FR 7826027**

(43) Date de publication de la demande :
**19.03.80 Bulletin 80/06**

(45) Mention de la délivrance du brevet :
**07.11.84 Bulletin 84/45**

(84) Etats contractants désignés :
**AT BE CH DE FR GB IT LU NL SE**

(56) Documents cités :
DE-A- 2 013 098
FR-A- 1 289 520
FR-A- 1 519 860
FR-A- 2 195 591
US-A- 2 238 437
US-A- 2 241 438
US-A- 2 384 610
US-A- 3 920 450
CHEMISCHES ZENTRALBLATT, volume 139, no. 15, 1968 AKADEMIE-VERLAG GmbH, Berlin, (DE) T. SEGARCEANU: "Selektive Abscheidung von Indium als Phosphat aus Indium enthaltenden Komplexen" abrégé 2243
CHEMISCHES ZENTRALBLATT, vol. 139, no. 52, 1968 AKADEMIE-VERLAG GmbH, Berlin (DE) M. GOLINSKI: "Extraktion des Indiums aus Sulfatlösungen mit Alkylphosphorsäuren" abrégé 2078
CHEMICAL ABSTRACTS; vol. 73, no. 8 24-08-1970, abrégé 37033w, page 96 Columbus, Ohio, USA
CHEMICAL ABSTRACTS, vol. 81, no. 18, 04-11-1974, page 219, abrégé 108981g Columbus, Ohio, USA B. DJUKOVIC et al.: "Possibilities for the obtaining of

(73) Titulaire : **SOCIETE MINIERE ET METALLURGIQUE DE PENARROYA Société anonyme dite:**
**Tour Maine-Montparnasse 33, avenue du Maine**
**F-75755 Paris Cédex 15 (FR)**

**Societa Mineraria e Metallurgica di Pertusola**
**Piazzale Flaminio 9**
**Rome 100196 (IT)**

(72) Inventeur : **Fossi, Paolo**
**52, avenue de Cressac**
**F-78190 Elancourt (FR)**
Inventeur : **Sambarino, Emilio**
**Viale Gramsci 194**
**I-88074 Crotone (CZ) (IT)**

(74) Mandataire : **Ricalens, François**
**Service de la Propriété Industrielle du Groupe IME-TAL 1, avenue Albert Einstein**
**F-78191 Trappes Cedex (FR)**

Indium from intermediary products of zinc electrolysis. II. Concentration and obtaining of indium from solutions »

CHEMICAL ABSTRACTS, vol. 88, no. 4, 23-01-1978, page 334, abrégé 28387x Columbus, Ohio, USA I.S. LEVIN et al. : « Chemistry of indium extraction by bis (2-ethyl-hexyl)dithiophosphate from solutions of sulfuric and perchloric acids »

JOURNAL OF INORG. NUCL. CHEM. vol. 37, no. 6, juin 1975, Pergamon Press (GB) T. SATO : « The Extraction of Indium (III), Lanthanum (III) and Bismuth (III) from Sulphuric Acid Solutions by di(2-éthylhexyl) phosphoric acid »

Le dossier contient des informations techniques présentées pestérieurement au dépôt de la demande et ne figurant pas dans le présent fascicule.

## Description

La présente invention a pour objet un procédé de récupération de l'indium contenu comme impureté dans les solutions aqueuses d'autres métaux.

Elle concerne plus particulièrement un procédé d'extraction de l'indium sélectivement vis-à-vis des autres métaux.

On sait que l'indium est souvent associé, à l'état de traces, à différentes catégories de minerais sulfurés de plomb, de zinc et de cuivre et notamment aux blendes.

Les trois quarts des blendes extraites annuellement servent à la production de zinc par le procédé électrolytique.

Pour cela, après avoir été enrichies par flottation, les blendes sont grillées pour donner un oxyde de zinc qui est lui-même lixivié à contre-courant par de l'acide sulfurique. La solution sulfurique issue de la lixiviation est pratiquement neutre et contient environ 90 % du zinc initialement présent dans l'oxyde tandis que la quasi-totalité de l'indium est dans le résidu avec le plomb, la silice et la ferrite du zinc formée au cours du grillage.

Ces résidus de lixiviation, parfois appelés « cake Moore » ou « cake Oliver », sont relativement riches en zinc et sont souvent retraités pour récupérer les métaux qu'ils contiennent.

Un premier traitement de ces résidus de lixiviation consiste à les traiter dans un four tournant (ou dans un cubilot) où une partie des métaux non-ferreux sont réduits, vaporisés, puis recueillis à l'état d'oxydes tandis que le fer et la silice sont éliminés sous forme de scorie.

Une partie notable de l'indium se trouve dans le mélange d'oxydes.

Ces oxydes sont généralement retraités au moyen d'une solution sulfurique qui permet de dissoudre le zinc, le cadmium et l'indium, tandis que le plomb forme un résidu de sulfate de plomb.

L'indium contenu dans ces solutions n'est que rarement récupéré car l'on ne connaissait pas jusqu'à la présente invention de procédé simple et sélectif de récupération de l'indium contenu dans de telles solutions.

Une autre voie de traitement des résidus de lixiviation sulfurique consiste à lixivier ces derniers par de l'acide sulfurique à une température et une concentration plus élevée que lors du traitement précédent. Ce procédé est également désigné sous le vocable anglo-saxon de « hot strong leaching » (HSL). Cette technique permet la dissolution de la ferrite, du zinc et de l'indium contenus dans le résidus, le plomb et la silice restant insolubles et formant un nouveau résidu.

Les solutions sulfuriques acides provenant du procédé HSL sont traitées pour récupérer les métaux qu'elles contiennent, souvent par réduction puis précipitation du fer sous forme de goethite ou par précipitation en présence d'ions alcalins, d'un sel complexe d'ions sulfate, d'hydroxyde ferrique et d'ions alcalins appelé jarosite.

Ces deux techniques provoquent la perte de l'indium qui est en général précipité en même temps que la jarosite ou que la goethite.

Par ailleurs, le brevet polonais n° 59.276 déposé le 28 décembre 1966 décrit une technique d'extraction liquide-liquide de l'indium par l'acide di-2-éthyl-hexyl phosphorique (D2EHPA) et montre qu'une telle molécule peut être utilisée pour la récupération dudit indium contenu dans des solutions zincifères.

Un des buts de la présente invention est de fournir un procédé de récupération de l'indium contenu dans les lixiviats sulfuriques qui ne mettent pas en œuvre une extraction liquide-liquide.

Un autre but de la présente invention est de fournir un procédé d'extraction de l'indium qui soit sélectif vis-à-vis des métaux contenus dans les lixiviats sulfuriques indifères.

Ces buts ainsi que d'autres qui apparaîtront par la suite, sont atteints au moyen du procédé de récupération sélective de l'indium contenu à l'état d'oxydation III et sous forme d'impureté dans des solutions aqueuses de sulfates contenant du fer ferrique et au moins un des métaux choisis dans le groupe de métaux constitué par l'aluminium, le gallium, l'arsenic, l'antimoine et le bismuth, caractérisé par le fait qu'il comporte les étapes suivantes :

a) mise en contact de ladite solution avec une phase contenant comme groupe actif un diester de l'acide phosphorique avec un alcool dont le nombre d'atomes de carbone est compris entre 6 et 12 imprégné dans une résine échangeuse d'ions ;

b) mise en contact de ladite phase avec une solution d'acide chlorhydrique dont la concentration est comprise entre une et deux moles et des chlorures alcalins ou alcalino-terreux à une concentration 3 à 4 fois molaire.

La première phase de l'étape a) est constituée par une phase stationnaire, telle que par exemple un polymère réticulé, sur lequel a été fixé, par greffage ou tout autre moyen approprié, un groupement actif constitué par un diester de l'acide orthophosphorique. Les diesters préférés sont ceux formés par des alcools lourds dont le nombre d'atomes de carbone est compris entre 6 et 12, ces alcools pouvant être linéaires ou ramifiés. Le diester préféré est l'acide di-2-éthyl-hexyl phosphorique. On peut utiliser comme phase stationnaire, dont le principe actif est constitué par un acide dialcoyle phosphorique, le produit commercialisé sous la marque déposée Lewatit OC 1026 par la Société Bayer et fabriqué suivant la technique décrite dans le DE-OS 2 162 951.

3

**0 008 992**

Il convient de signaler à ce stade de la description que, bien que l'affinité de l'indium pour l'acide di-2-éthyl-hexyl phosphorique (D2EHPA) ait été étudiée de manière théorique dans les deux articles suivants : « Kinetics of the Extraction of Indium by Di-2-Ethylexylphosphoric Acid from Sulphate Solutions » (A.I. Potapova and Yu. B. Kletenik, Izvest. Sibir. Otdel. Akad. Nauk SSSR, Sept. 1973) et « The Extraction of Indium (III), Lanthanum (III) and Bismuth III, from Sulphuric Acid Solutions by di(2-éthylhexyl-) phosphoric Acid » (T. Sato, Journal of Inor. Nucl. Chem., Volume 37, N° 6, juin 1975), il est particulièrement surprenant que l'extraction de l'indium soit sélective vis-à-vis des métaux contenus dans les solutions de lixiviation sulfuriques, puisque les diesters de l'acide orthophosphorique sont en général considérés comme de très bons extractants du fer, du zinc et de la plupart des éléments cationiques trivalents. En particulier, le fer ferrique est connu pour former avec l'acide di-2-éthyl-hexyl phosphorique (D2EHPA) un complexe si stable qu'il ne peut être élué en milieu sulfurique, et qu'il ne peut être que partiellement déplacé en présence d'acide chlorhydrique très concentré (de 5 à 10 N) ; cet état semble amoindri lorsqu'on utilise les diesters de l'acide phosphorique pur dans une phase solide.

Une caractéristique de la présente invention est que ce procédé est particulièrement bien adapté au traitement des solutions sulfuriques contenant de 5 à 300 grammes par litre et de préférence de 50 à 200 grammes par litre d'ions sulfate.

L'acidité de ces solutions peut être comprise entre 0,01 et 5 N, et de préférence entre 0,05 et 2 N.

Le procédé, selon la présente invention, permet l'extraction sélective vis-à-vis du zinc, du fer et de l'arsenic tant que les concentrations en ions zinc, ferreux, ferrique et arsenic n'excèdent pas respectivement 180 grammes par litre, 50 grammes par litre, 5 et de préférence 1 gramme par litre, 10 grammes par litre.

Cette sélectivité de l'extraction de l'indium par les diesters de l'acide orthophosphorique est d'autant plus surprenante qu'il est possible de fixer l'indium, même présent à l'état de traces (moins de 100 milligrammes par litre), à partir de solutions contenant environ 100 grammes par litre de zinc et jusqu'à environ 10 grammes par litre de fer, le taux de récupération de l'indium étant supérieur à 90 %, cette fixation étant sélective malgré l'affinité connue du D2EHPA par le fer (III) et les autres cations du type métal (III) tels que l'aluminium, le bismuth, le gallium, l'antimoine et l'arsenic.

Sans que cette interprétation soit restrictive de l'invention, il semble que ces phénomènes cinétiques soient à l'origine de cette sélectivité. C'est pourquoi il est préférable de limiter le temps de contact entre la phase solide extractante et la solution indifère si cette dernière contient plus de 1 gramme par litre de fer (III). On arrête alors l'extraction dès que la teneur en indium de la solution descend au-dessous d'une valeur choisie à l'avance. Cette valeur dépend du rang de l'étape lorsque l'extraction est réalisée en plusieurs étapes et du nombre d'étapes.

De préférence, on fait en sorte qu'à la fin de l'étape a), la teneur en indium de la solution soit comprise entre 1 et 10 mg/l.

L'influence des paramètres susceptibles de modifier la cinétique tels que la température, la concentration de la solution de lixiviation sulfurique ou la composition de la phase extractante, est illustrée par les exemples 1 à 5.

Lorsque la teneur en ions ferriques est trop élevée et excède les valeurs limites précédemment indiquées, il est possible de la réduire en mettant au contact de la solution un agent susceptible de réduire le fer ferrique ou en le lui ajoutant. Parmi ces agents, on peut citer le fer métallique, l'acide sulfureux et ses sels ainsi que les concentrés sulfurés non encore grillés.

Un mode de réalisation préféré de l'invention consiste à utiliser comme phase extractante de l'étape a) une phase stationnaire analogue à celle utilisée dans le certification d'addition N° FRA 2 334 756 au brevet français N° FRA 2 297 925, dans le but de fixer l'arsenic, l'aluminium, le chrome et le zinc contenus à l'état d'impuretés dans les solutions de chlorure de nickel.

Outre les avantages généraux liés à l'emploi des phases stationnaires plutôt qu'aux phases organiques liquides comme réactifs de traitement des solutions diluées, la préférence est justifiée dans ce cas particulier par la possibilité d'opérer à plus haute température et en l'absence de tout diluant.

Il a été en effet observé que les diluants qui sont habituellement ajoutés aux diesters orthophosphoriques en vue de réaliser l'étape a) par la technique d'extraction liquide-liquide, avaient une influence défavorable sur la sélectivité de la séparation et le rendement d'extraction.

Les meilleures performances, tant pour la sélectivité que pour le rendement, sont réalisées en l'absence de tout diluant d'où l'intérêt d'une phase immobilisée au moyen d'un substrat inerte n'entraînant aucune dilution.

Une autre caractéristique surprenante de la présente invention réside dans le fait que malgré la grande affinité des diesters orthophosphoriques pour l'indium, ce qui explique la fixation préférentielle de ce dernier vis-à-vis des autres métaux présents dans les lixiviats sulfuriques, l'élution à partir de la première phase, ou phase extractante de l'étape a) est relativement aisée et ne nécessite pas obligatoirement que la deuxième phase, dite phase de réextraction, soit très acide.

Les ions halogénure peuvent être introduits sous forme de sels de métaux alcalins ou alcalino-terreux.

Un mode de réalisation préférentiel de l'invention consiste à utiliser à l'étape b) comme seconde phase ou phase de réextraction une solution aqueuse de chlorures alcalins 3 ou 4 fois molaire contenant 1 à 2 moles par litre d'acide chlorhydrique.

4

# 0 008 992

L'exemple 1 illustre comment l'emploi de saumures constituées par des chlorures alcalins ou alcalino-terreux permet d'obtenir une meilleure efficacité qu'en utilisant l'acide chlorhydrique seul.

Les autres halogénures alcalins ou alcalino-terreux ou leurs mélanges pourraient également convenir.

Lorsque du fer ferrique a été extrait en même temps que l'indium, il est possible de réaliser une élution sélective de celui-ci en utilisant comme phase d'élution des saumures dont l'acidité est inférieure à 2 N. Dans ce cas, l'exemple 5 met en évidence les performances améliorées que l'on peut obtenir en substituant des ions bromure à tout ou partie des ions chlorure. Lorsque la même substitution est réalisée au bénéfice d'ions iodure, l'élution est sensiblement plus lente, mais la sélectivité reste élevée.

Les exemples, non limitatifs, décrits ci-dessous permettront aux spécialistes en la matière de mieux comprendre la mise en œuvre et les avantages procurés par le procédé selon la présente invention.

## Exemple 1

Comparaison de diverses saumures de chlorures alcalins ou alcalino-terreux comme agents d'élution

Essais réalisés en ampoule à décanter avec des volumes de phase aqueuse et de phase organique égaux.

Le tableau donne le pourcentage d'indium élué, en un contact.

| Saumure | Concentration de la saumure en mole/l | Pourcentage d'indium élué en fonction de l'acidité de la saumure exprimé en N | |
|---|---|---|---|
| | | 0,5 | 1,5 |
| LiCl | 3,5 | 67 | 85 |
| KCl | 3,4 | 34,6 | |
| NaCl | | | |
| MgCl$_2$ | 3 | 50 | 87,7 |
| CaCl$_2$ | 3,4 | 80,4 | |

Ainsi, en utilisant comme agents d'élution une saumure de chlorures alcalins ou alcalino-terreux, on obtient une meilleure efficacité qu'en utilisant de l'acide chlorhydrique seul.

## Exemple 2

Solution de départ :

| | |
|---|---|
| ZnSO$_4$ : | 90 g/l exprimés en zinc |
| H$_2$SO$_4$ : | 0,6 N |
| In : | 0,170 mg/l |

Colonne de 500 ml environ, hauteur 1 m, remplie de Lewatit OC 1026.

La vitesse de passage de la solution correspond à quatre fois le volume apparent du lit par heure.

Si l'on prélève la solution sortante de la colonne à différents volumes de percolation, on trouve les concentrations en indium données dans le tableau suivant :

| Volume de percolation en litres | 0 | 4 | 5 | 10 | 13,5 | 16 | 19 | 20,5 |
|---|---|---|---|---|---|---|---|---|
| Concentration indium en mg/l | 160 | 2 | 5 | 56 | 89 | 120 | 145 | 160 |

La capacité de fixation de la résine ainsi traitée dans cet exemple dépasse légèrement 2 grammes d'indium par litre de phase stationnaire.

## Exemple 3

Cycle complet d'extraction

Une solution indifère sulfurique de composition suivante :

5

| | | |
|---|---|---|
| Indium : | | 0,169 g/l |
| Fer : | 1,0 | g/l (complètement ferrique) |
| Arsenic : | 1,5 | g/l |
| Zinc : | 95 | g/l |
| H$_2$SO$_4$ : | 30 | g/l |
| Cuivre : | 0,2 | g/l |

est mise en contact avec une résine vendue sous la marque déposée Lewatit OC 1026 jusqu'à ce que la solution issue de la colonne contienne plus de 10 mg/l d'indium. Le débit est de l'ordre de 4 b. v./heure (b. v. est le sigle anglo-saxon de « bed volume », c'est-à-dire volume du lit de résine). La concentration en indium de la solution sortante ne s'élève au-dessus de 10 mg/l qu'au bout de 5 heures.

La composition moyenne de la solution sortant de la colonne pendant les 5 premières heures est :

| | | |
|---|---|---|
| Indium : | 10 | mg/l |
| Fer : | 0,78 | g/l |
| Arsenic : | 1,48 | g/l |
| Zinc : | 95 | g/l |
| H$_2$SO$_4$ : | 30 | g/l |
| Cuivre : | 0,2 | g/l |

Si l'on poursuit la mise en contact de la solution indifère avec la résine, on obtient des solutions sortantes dont la teneur en indium est indiquée dans le tableau suivant, en mg/l :

Après 1 heure : 10
Après 2 heures : 10
Après 3 heures : 10
Après 4 heures : 10
Après 5 heures : 15
Après 6 heures : 34
Après 7 heures : 75
Après 8 heures : 117
Après 9 heures : 123
Après 10 heures : 140
Après 11 heures : 150
Après 12 heures : 154
Après 13 heures : 157
Après 14 heures : 160
Après 15 heures : 160

La résine ainsi chargée en indium est rincée pendant une heure en faisant passer de l'eau additionnée d'acide chlorhydrique (pH 3) à un débit de 2 b. v./heure.

L'analyse de cette eau de lavage est indiquée ci-après :

| | Zn en g/l |
|---|---|
| Après 15 minutes : | 50 |
| Après 30 minutes : | 4,5 |
| Après 45 minutes : | 0,8 |
| Après 60 minutes : | 0,4 |

La résine rincée est éluée avec une solution d'acide chlorhydrique (0,5 N) et de chlorure de sodium (4 N) pendant 2 heures avec un débit de 1 b. v./heure. L'analyse de l'éluat est donnée ci-après :

Premiers 0,6 b. v. : In = 10 mg/l (eau d'imprégnation)
          1,4 b. v. : In = 3,1 g/l ; Fe = 0,46 g/l ;
                    As = 0,3 g/l.

La résine ainsi libérée de l'indium a été lavée par 2 b. v. d'acide chlorhydrique 5 N (débit 2 b. v./heure). L'analyse des eaux de rinçage est indiquée ci-après :

0,6 premiers b. v. : In = 10 mg/l ; Fe = 0,32 g/l (HCl d'imprégnation).
1,4 b. v. suivants : In = 1 mg/l ; Fe = 0,10 mg/l.

L'éluat ainsi obtenu (1,4 b.v.) est traité par de la soude 4 N à raison de 15 g de soude par litre d'éluat traité. Le précipité est filtré et séché.

L'analyse du filtrat et du résidu solide sec est indiquée ci-après :

Filtrat :

6

| | |
|---|---|
| pH : 5,5 | |
| Indium : | 10 mg/l |
| Fer : | 10 mg/l |
| Arsenic : | 10 mg/l |

Résidu lavé : 5,75 g de produit sec par litre de saumure traitée.
Analyse du résidu :

| | |
|---|---|
| Indium : | 54 % |
| Fer : | 8,1 % |
| Arsenic : | 5,3 % |
| Zinc : | 1,2 % |
| Cuivre : | 0,01 % |

Les résultats obtenus à partir d'une solution indifère ne se différenciant de celle de cet exemple que par une concentration en acide sulfurique de 60 g/l sont sensiblement identiques à ceux indiqués ci-dessus.

Exemple 4

Extraction en présence de fer ferreux

Une solution indifère sulfurique de composition suivante :

Indium : 0,15 g/l
$Fe^{2+}$ : 0,87 g/l

est mise en contact avec une résine vendue sous la marque déposée Lewatit OC 1026 jusqu'à ce que la solution issue de la colonne contienne plus de 10 mg/l d'indium. Le débit est de l'ordre de 4 b. v./heure. La concentration en indium de la solution sortant de la colonne pendant les 5 premières heures est :

Indium : 10 mg/l
Fe $2^+$ : 0,87 g/l.

La résine ainsi chargée en indium est rincée pendant une heure en faisant passer de l'eau pure à un débit de 2 b. v./heure.
La résine rincée est éluée avec une solution d'acide chlorhydrique (0,5 N) et de chlorure de sodium (4 N) pendant 2 heures avec un débit de 1 b.v./heure. L'analyse de l'éluat est donnée dans le tableau ci-après :

| | Indium | $Fe^{2+}$ |
|---|---|---|
| 0,6 b.v. | — | — |
| 1,4 b.v. | 2,5 g/l | 2 mg/l |

Cet exemple montre que la sélectivité de l'extraction de l'indium est meilleure lorsque la solution indifère contient des ions ferreux au lieu d'ions ferriques.

Exemple 5

Une résine chargée en indium, puis rincée par de l'acide chlorhydrique dilué est éluée d'une manière comparative, respectivement avec :
a) une solution 4 fois molaire en NaCl
1 fois molaire en HCl
b) une solution 4 fois molaire en NaI
1 fois molaire en HCl
c) une solution 4 fois molaire en NaBr
1 fois molaire en HCl.
On obtient les résultats suivants, qui sont à comparer avec une élution
d) réalisée au moyen d'HCl 8 N.

7

| Essai | % indium élué en fonction du nombre de BV | % fer élué en fonction du nombre de BV | Sélectivité d'élution<br>Rapport des concentrations indium et fer au pic d'élution In |
|---|---|---|---|
| a | 2 : 33,5<br>4 : 78,5<br>8 : 94,5<br>12 : 98 | 4,2<br>11,6<br>25,0<br>34,0 | 8 |
| b | 2 : 2<br>4 : 17<br>8 : 18<br>13 : 21<br>15 : 60 | 21<br>72<br>87<br>89<br>93 | 27 |
| c | 2 : 32<br>4 : 85<br>8 : 96<br>12 : 97 | 3,0<br>5,0<br>9,0<br>12,0 | 35 |
| d | 2 : 48<br>4 : 82<br>8 : 88<br>12 : 92<br>16 : 97 | 46<br>76<br>91<br>96<br>98 | 1,7 |

Ces résultats mettent en évidence la sélectivité accrue des saumures d'halogénures comparées à l'acide chlorhydrique.

**Revendications**

1. Procédé de récupération sélective de l'indium contenu à l'état d'oxydation III et sous forme d'impureté dans des solutions aqueuses de sulfates contenant du fer ferrique et au moins un des métaux choisis dans le groupe de métaux constitué par l'aluminium, le gallium, l'arsenic, l'antimoine et le bismuth, caractérisé par le fait qu'il comporte les étapes suivantes :
   a) mise en contact de ladite solution avec une phase contenant comme groupe actif un diester de l'acide phosphorique avec un alcool dont le nombre d'atomes de carbone est compris entre 6 et 12 imprégné dans une résine échangeuse d'ions ;
   b) mise en contact de ladite phase avec une solution d'acide chlorhydrique dont la concentration est comprise entre une et deux moles et des halogénures alcalins ou alcalino-terreux à une concentration 3 à 4 fois molaire.
   2. Procédé selon la revendication 1, caractérisé par le fait que la concentration en sulfates de la solution aqueuse est comprise entre 50 et 200 grammes par litre et par le fait que sa concentration en ions $H^+$ est comprise entre 0,01 et 5 N.
   3. Procédé selon la revendication 1, caractérisé par le fait que le diester de l'acide orthophosphorique est l'acide di-2-ethyl-hexyl-phosphorique.

**Claims**

1. Process for the selective recovery of indium contained in oxidation state III and as an impurity in aqueous solutions of sulphates containing ferric iron and at least one of the metals selected from the group of metals consisting of aluminium, gallium, arsenic, antimony and bismuth, characterised by the fact that it comprises the following stages :
   a) bringing the said solution in contact with a phase containing as its active group a diester of phosphoric acid with an alcohol in which the number of carbon atoms is between 6 and 12 impregnated in an ion exchange resin ;
   b) bringing the said phase in contact with a solution of hydrochloric acid whose concentration is between one and two moles and alkaline or alkaline earth halides at 3 to 4 times molar concentration.
   2. Process according to claim 1 characterised by the fact that the sulphate concentration of the aqueous solution is between 50 and 200 grams per litre and by the fact that its H⁺ ion concentration is between 0.01 and 5N.

3. Process according to claim 1 characterised by the fact that the orthophosphoric acid diester is 2-diethylhexyl phosphoric acid.

## Ansprüche

1. Verfahren zur selektiven Gewinnung des Indiums, das im Oxidationszustand III und in Verunreinigungsform in wässerigen Sulfatlösungen enthalten ist, die Ferrieisen und wenigstens eines der Metalle enthalten, die aus der aus Aluminium, Gallium, Arsen, Antimon und Wismut gebildeten Metallgruppe gewählt sind, dadurch gekennzeichnet, daß es die folgenden Stufen umfaßt :

a) Kontaktierung der genannten Lösung mit einer Phase, die als aktive Gruppe einen in einem Ionenaustauschharz imprägnierten Diester der Phosphorsäure mit einem Alkohol enthält, dessen Kohlenstoffatomzahl 6 bis 12 beträgt ;

b) Kontaktierung der genannten Phase mit einer Lösung von Salzsäure, deren Konzentration im Bereich von einem bis zwei Mole liegt, und von Alkali- oder Erdalkalihalogeniden mit einer dreibis vierfach molaren Konzentration.

2. Verfahren nach dem Anspruch 1, dadurch gekennzeichnet, daß die Sulfatkonzentration der wässerigen Lösung im Bereich von 50 bis 200 Gramm je Liter liegt und daß ihre H⁺-Ionenkonzentration im Bereich von 0,01 bis 5 N liegt.

3. Verfahren nach dem Anspruch 1, dadurch gekennzeichnet, daß der Diester der Orthophosphorsäure die Di-2-ethyl-hexyl-Phosphorsäure ist.